**Europäisches Patentamt**

**European Patent Office**

**Office européen des brevets**

(19)

(11) Veröffentlichungsnummer: **0 644 959 B1**

(12) **EUROPÄISCHE PATENTSCHRIFT**

(45) Veröffentlichungstag der Patentschrift: **27.12.95**

(51) Int. Cl.6: **D01F 6/60**

(21) Anmeldenummer: **93912778.3**

(22) Anmeldetag: **25.05.93**

(86) Internationale Anmeldenummer:
**PCT/EP93/01304**

(87) Internationale Veröffentlichungsnummer:
**WO 93/25736 (23.12.93 93/30)**

(54) **SCHNELLGESPONNENE FÄDEN AUF DER BASIS VON POLYCAPROLACTAM UND VERFAHREN ZU IHRER HERSTELLUNG**

(30) Priorität: **06.06.92 DE 4218719**

(43) Veröffentlichungstag der Anmeldung:
**29.03.95 Patentblatt 95/13**

(45) Bekanntmachung des Hinweises auf die
Patenterteilung:
**27.12.95 Patentblatt 95/52**

(84) Benannte Vertragsstaaten:
**BE DE ES FR GB IT NL**

(56) Entgegenhaltungen:
**EP-A- 0 462 476**
**US-A- 3 386 967**

**DATABASE WPI Section Ch, Week 8713, Derwent Publications Ltd., London, GB; Class A, AN 87-090833 & JP, A, 62041313**

**DATABASE WPI Section Ch, Week 7312, Derwent Publications Ltd., London, GB; Class A, AN 73-16920U & JP, B, 48008524**

(73) Patentinhaber: **BASF Aktiengesellschaft**
**Carl-Bosch-Strasse 38**
**D-67063 Ludwigshafen (DE)**

(72) Erfinder: **MATTHIES, Paul**
**Truebnerstrasse 59**
**D-6900 Heidelberg (DE)**
Erfinder: **HAHN, Karl**
**Salierstrasse 3**
**D-6701 Maxdorf (DE)**
Erfinder: **MELL, Karlheinz**
**Dackenheimer Strasse 2**
**D-6700 Ludwigshafen (DE)**
Erfinder: **SAUER, Thomas**
**Stahlberger Strasse 3**
**D-6716 Dirmstein (DE)**
Erfinder: **WEINERTH, Klaus**
**Triftbrunnen Weg 49**
**D-6730 Neustadt (DE)**

DATABASE WPI Section Ch, Week 8339, Derwent Publications Ltd., London, GB; Class A, AN 83-774175 & JP, A, 58141211

Erfinder: **LAUN, Martin**
**Duererstrasse 22**
**D-6700 Ludwigshafen (DE)**
Erfinder: **HABERKORN, Herbert**
**Oberer Bergelweg 5**
**D-6718 Gruenstadt (DE)**

## Beschreibung

Die vorliegende Erfindung betrifft Fäden mit einer relativen Viskosität RV von 2,0 bis 3,0 (gemessen bei einer Konzentration von 1 g Fäden pro 100 ml in 96 gew.-%iger Schwefelsäure) auf der Basis von Polycaprolactam, erhältlich durch

(a) Extrudieren einer im wesentlichen aus Polycaprolactam bestehenden Schmelze durch eine Spinndüse, so daß Polycaprolactamfilamente gebildet werden;

(b) Abkühlen der so hergestellten Filamente und

(c) Abziehen der abgekühlten Filamente mit einer Geschwindigkeit von mindestens [3600 + 1250•(3,0 - RV)] m/min, und

wobei das verwendete Polycaprolactam in Gegenwart von mindestens einer Dicarbonsäure ausgewählt aus der Gruppe aus

- $C_4$-$C_{10}$-Alkandicarbonsäuren,
- $C_5$-$C_8$-Cycloalkandicarbonsäuren,
- Benzol- und Naphthalindicarbonsäuren, die bis zu zwei Sulfonsäuregruppen tragen können und derer Carbonsäuregruppen nicht benachbart sind,
- N-$C_1$-$C_6$-Alkyl-N,N-di($C_4$-$C_{10}$-alkancarbansäure)amin,
- 1,4-Piperazin-di($C_1$-$C_{10}$-alkancarbonsäure)

hergestellt wurde.

Weiterhin betrifft die Erfindung ein Verfahren zur Herstellung dieser Fäden, deren Verwendung zur Herstellung von Flächengebilden, sowie Flächengebilde aus diesen Fäden.

Beim Schnellspinnen von Polyamiden werden im allgemeinen die aus der Spinndüse austretenden Fäden mit Geschwindigkeiten von über 3000 m/min von der Düse abgezogen, während man beim konventionellen Spinnen mit Abzugsgeschwindigkeiten in der Regel von maximal etwa 1200 m/min arbeitet.

Im Vergleich zum konventionellen Spinnen bietet das Schnellspinnen im allgemeinen den Vorteil einer höheren Produktivität. In einigen Fällen, speziell bei Polycaprolactam, kann man unter Umständen den Verfahrensschritt der Verstreckung einsparen. Des weiteren ist beim Schnellspinnen von Vorteil, daß die Verspinnung und Aufspulung in der Regel weniger stark vom Feuchtigkeitsgehalt und von der Temperatur der umgebenden Raumluft abhängen als beim konventionellen Spinnen. Ferner ist in der Regel die Lagerfähigkeit der aufgespulten Fäden bis zur Weiterverarbeitung gegenüber konventionell gesponnenen Fäden verbessert. Darüberhinaus eignen sich schnellgesponnene Fäden im allgemeinen besonders gut für die Strecktexturierung, das Streckschären und Streckschlichten.

Unter Strecktexturierung versteht man das Verstrecken und die Texturierung in einem Arbeitsgang, wobei man bei der Texturierung eine spezielle Faserstruktur durch eine richtungsgebundene Orientierung der Makromoleküle erzeugt. Hierdurch erreicht man im allgemeinen eine höhere Elastizität, Volumendeckkraft und Wärmeisolation im Vergleich zu glatten Fäden. Zur besseren Weiterverarbeitung können solche Fäden nachgeölt und/oder verwirbelt werden.

Zur Herstellung von Kettwirkwaren oder Webwaren muß eine Vielzahl von Fäden parallel nebeneinander als Kette in der Kettwirkmaschine bzw. dem Webstuhl vorgelegt werden. Zu diesem Zweck werden mehrere hundert bis mehrere tausend Fäden gemeinsam auf einen sog. Baum aufgespult. Dabei werden die Fäden häufig zur Erzielung eines verbesserten Fadenschlusses und einer verbesserten Weiterverarbeitbarkeit verwirbelt, nachgeölt, paraffiniert oder geschlichtet. Mehrere solcher Bäume könne in einem weiteren Schritt zur Vermehrung der Fadenzahl assembliert werden. Die Herstellung eines (Teil-)Kettbaumes kann mit einer gemeinsamen Verstreckung der gesamten Fadenschar kombiniert werden (Streckschären), desgleichen das Schlichten einer Fadenschar (Streckschlichten), wobei den Fäden bessere Gleiteigenschaften und ein besserer mechanischer Schutz durch eine Umhüllung mit dem Schlichtemittel verliehen werden.

Die Verstreckung kann auch in bekannter Weise an die Verspinnung angeschlossen oder in diese integriert sein ("on line").

In der EP-B 201,189 wird ein Schmelzspinnverfahren zur Herstellung von Polyamidfilamenten beschrieben, das dadurch gekennzeichnet ist, daß man ein geschmolzenes Polymergemisch, das ein niedermolekulares Zusatzmittel wie Wasser enthält, mit einer relativen Viskosität von 2,0 bis 3,0 (gemessen in 96 gew.-%iger Schwefelsäure) extrudiert, die gebildeten Filamente abkühlt und die abgekühlten Filamente mit einer Geschwindigkeit von mehr als 3200 m/min abzieht. Fäden aus Polycaprolactam, das in Gegenwart einer als Kettenregler wirkenden Dicarbonsäure hergestellt wurde, werden nicht beschrieben.

In der DE-A 4,019,780 wird ein Verfahren zur Herstellung von Polycaprolactam in Gegenwart von Dicarbonsäuren, die als Kettenregler dienen, beschrieben. Aus dem dort beschriebenen Polycaprolactam (relative Viskosität RV = 2,36) hergestellte, bei einer Abzugsgeschwindigkeit von 4250 m/min schnellgesponnene Fäden erweisen sich bezüglich der Fadenfestigkeit und der Bruchdehnung als vergleichbar zu Fäden nach dem Stand der Technik.

Ein Nachteil von schnellgesponnenen und aus diesen gewonnenen verstreckten oder strecktexturierten Fäden besteht darin, daß sie im allgemeinen niedrigere Werte bezüglich der Höchstzugkraft aufweisen als entsprechende konventionell gesponnene, bis zur gleichen Höchstzugkraftdehnung verstreckte bzw. texturierte Fäden. Des weiteren ist die Zugkraftänderung bei der Dehnung der Fäden, erhältlich durch Messen der Zugkraft in Abhängigkeit von der Längenänderung ("Zugkraft-Längenänderungskurve"), solcher schnellgesponnenen Fäden im allgemeinen nicht befriedigend groß, d.h. der Kurvenverlauf ist in der Regel zu flach.

Im Vergleich zu schnellgesponnenem Polyamid 66 (Polyhexamethylenadipinsäureamid) haben schnellgesponnene Polycaprolactamfäden nach der Strecktexturierung bei gleicher Höchstzugkraftdehnung ferner den Nachteil einer geringeren Kräuselbeständigkeit.

Aufgabe der vorliegenden Erfindung war es, schnellgesponnene Fäden auf der Basis von Polycaprolactam zur Verfügung zu stellen, die die oben genannten Nachteile nicht aufweisen. Insbesondere sollten Fäden mit einer größeren Zugkraftänderung (bezogen auf die Längenänderung), d.h. einer steileren Zugkraft-Längenänderungskurve, einer verbesserten Höchstzugkraft, und - bei texturierten Fäden - einer verbesserten Kräuselbeständigkeit zur Verfügung gestellt werden.

Demgemäß wurden die eingangs definierten Fäden gefunden.

Außerdem wurde ein Verfahren zur Herstellung dieser Fäden, deren Verwendung zur Herstellung von Flächengebilden, sowie Flächengebilden aus diesen Fäden gefunden.

Erfindungsgemäß verspinnt man eine Schmelze, die im wesentlichen das oben definierte Polycaprolactam enthält, wobei man die abgekühlten Filamente mit einer Geschwindigkeit von mindestens $[3600 + 1250 \cdot (3,0 - RV)]$ m/min, bevorzugt mindestens $[3800 + 1250 \cdot (3,0 - RV)]$ m/min, abzieht. Bei Spinngeschwindigkeiten von größer als $[3600 + 1250 \cdot (3,0 - RV)]$ m/min beobachtet man eine nicht zu erwartende Verbesserung der Höchstzugkraft. Dies äußert sich darin, daß je höher man die Spinngeschwindigkeit oberhalb von $[3600 + 1250 \cdot (3,0 - RV)]$ m/min bei gegebenem RV wählt, desto größer der Zuwachs der Höchstzugkraft von derart gesponnen Fäden ist. Handelsübliches Polycaprolactam zeigt nach unseren Erfahrungen diesen Effekt entweder gar nicht oder nur in geringerem Maße (s. Vergleichsbeispiele). Der Effekt tritt nach den bisherigen Beobachtungen unterhalb einer Spinngeschwindigkeit von $[3600 + 1250 \cdot (3,0 - RV)]$ m/min bei gegebenem RV nicht auf.

Die Obergrenze der Spinngeschwindigkeit liegt in der Regel nicht höher als 8000 m/min und hängt im wesentlichen von der Viskosität der zu verspinnenden Schmelze und der verwendeten Spinnvorrichtung ab.

Die relative Viskosität RV des zu verspinnenden Polycaprolactams liegt in der Regel im Bereich von 2,0 bis 3,0 (gemessen bei einer Konzentration von 1 g des einzusetzenden Polycaprolactams pro 100 ml in 96 gew.-%iger Schwefelsäure bei 25 °C), bevorzugt im Bereich von 2,3 bis 2,9. Ein Polycaprolactam mit einer RV größer als 3,0 ist in der Regel zu hochviskos, um noch schnell versponnen werden zu können, ein Polycaprolactam mit einer RV kleiner als 2,0 bildet im allgemeinen keine stabil zu verspinnenden Fäden.

Die relative Viskosität RV der gesponnenen Fäden liegt erfindungsgemäß im Bereich von 2,0 bis 3,0 (gemessen bei einer Konzentration von 1 g des einzusetzenden Polycaprolactamfadens pro 100 ml in 96 gew.-%iger Schwefelsäure bei 25 °C), bevorzugt im Bereich von 2,3 bis 2,9.

Erfindungsgemäß setzt man Polycaprolactame ein, die in Gegenwart von mindestens einer Dicarbonsäure, die als Kettenregler wirksam ist, hergestellt wurden. Solche Polycaprolactame sind zum Teil beispielsweise aus der US-A 3,386,976 und der DE-A 40 19 780 bekannt. Die Herstellung der erfindungsgemäßen Polycaprolactame nimmt man bevorzugt in Anlehnung an das in der DE-A 40 19 780 beschriebene Einstufen-Verfahren vor.

Zweckmäßig polymerisiert man Caprolactam in Gegenwart von Wasser als Initiator unter Mitverwendung von Dicarbonsäuren als Kettenregler bei einer Temperatur im Bereich von 230 bis 300, bevorzugt von 240 bis 290 °C.

Geeignete Vorrichtungen zur Durchführung der Polymerisation sind dem Fachmann bekannt und beispielsweise in den DE-ASen 2,448,100, 1,495,198 und in der EP-B 20,946 beschrieben.

Das als Initiator verwendete Wasser setzt man im allgemeinen in einer Menge im Bereich von 0,1 bis 5 Gew.-%, insbesondere von 0,5 bis 3 Gew.-%, bezogen auf Caprolactam, ein.

Als Dicarbonsäuren verwendet man bevorzugt solche, die bei der hydrolytischen Polymerisation von Caprolactam als difunktionelle Kettenregler wirken und sich unter den Bedingungen der Polymerisation und der Verspinnung nicht zersetzen und auch nicht zu Verfärbungen oder anderen unerwünschten Erscheinungen führen. Des weiteren sind solche Dicarbonsäuren ungeeignet, die beispielsweise durch die Bildung einer Ringstruktur kettenbegrenzend wirken können. Als Beispiele für ungeeignete Dicarbonsäuren seien Bernsteinsäure und Phthalsäure genannt, da sie durch Ringschluß kettenbegrenzend wirken können.

EP 0 644 959 B1

Geeignete Dicarbonsäuren sind beispielsweise

$C_4$-$C_{10}$-Alkandicarbonsäuren wie Adipinsäure, Pimelinsäure, Korksäure, Azelainsäure, Sebazinsäure, Undecandisäure und Dodecandisäure, bevorzugt Adipinsäure,

$C_5$-$C_8$-Cycloalkandicarbonsäuren wie Cyclopentan-1,3-dicarbonsäure, Cyclohexan-1,4-dicarbonsäure, bevorzugt Cyclohexan-1,4-dicarbonsäure,

Benzol- und Naphthalindicarbonsäuren, die bis zu zwei Sulfonsäuregruppen, wobei hierunter auch die entsprechenden Alkalimetallsalze mitzuzählen sind, tragen können und deren Carbonsäuregruppen nicht benachbart sind, wie Terephthalsäure, Isophthalsäure, Naphthalin-2,6-dicarbonsäure, 5-Sulfoisophthalsäure, bevorzugt Terephthalsäure, Isophthalsäure und 5-Sulfoisophthalsäure, und deren Mischungen,

N-$C_1$-$C_6$-Alkyl-N,N-di($C_4$-$C_{10}$-alkancarbonsäure)amin wie N-Methyl-N,N-di(capronsäure)amin, N-Methyl-N,N-di(essigsäure)amin,

1,4-Piperazin-di($C_1$-$C_6$-alkancarbonsäure) wie 1,4-Piperazin-diessigsäure, 1,4-Piperazin-dipropionsäure, 1,4-Piperazin-dibutansäure, 1,4-Piperazin-dipentansäure, 1,4-Piperazin-dihexansäure, bevorzugt 1,4-Piperazin-diessigsäure und 1,4-Piperazin-dipropionsäure.

Fäden mit Dicarbonsäuren, die tertiäre Aminogruppen tragen, kann man im allgemeinen leicht mit anionischen Farbstoffen färben. Dies kann in einigen Fällen zur Erzielung besonders intensiver Farbtöne erwünscht sein.

Sulfonatgruppenhaltige Fäden kann man in der Regel gut mit kationischen Farbstoffen färben. Hingegen wird die Fähigkeit solcher Fäden mit anionischen Farbstoffen, die beispielsweise in vielen Lebensmitteln und Getränken vorkommen, zu reagieren, herabgesetzt, was in der Regel zu einer geringeren Anschmutzempfindlichkeit führt.

Zweckmäßig führt man die Dicarbonsäuren dem Kopf der Polymerisationszone zu, wobei für eine innige Durchmischung mit der polymerisierenden Schmelze gesorgt wird. Man kann die Dicarbonsäuren aber auch vor oder während der Polymerisation zusetzen.

Die Dicarbonsäuren setzt man in der Regel in Mengen im Bereich von 0,05 bis 0,6, insbesondere von 0,1 bis 0,5 Mol-%, bezogen auf Caprolactam, ein.

In einer weiteren Ausführungsform kann man neben den genannten Dicarbonsäuren als Kettenregler Diamine des Typs N,N-Di-($C_1$-$C_6$-alkyl)amino-($C_2$-$C_{12}$-alkyl)amin einsetzen, falls man eine Verbesserung der Anfärbbarkeit gegenüber anionischen Farbstoffen wünscht.

Beispielhaft seien genannt 2-Diethylamino-1-ethylamin, 6-Dimethylamino-1-hexylamin, 3-Dimethylamino-1-propylamin, 3-Diethylamino-1-propylamin, bevorzugt 3-Dimethylamino-1-propylamin, 3-Diethylamino-1-propylamin.

Vorzugsweise setzt man die Diamine des Typs N,N-Di-($C_1$-$C_6$-alkyl)amino-($C_2$-$C_{12}$-alkyl)amin in Mengen im Bereich von 0,05 bis 0,3, besonders bevorzugt von 0,1 bis 0,3 Mol-%, ein, bezogen auf Caprolactam. Die Verwendung von weniger als 0,05 Mol-% führt in der Regel zu keiner wesentlichen Verbesserung der Anfärbbarkeit, bei einer Menge von über 0,3 Mol-% wirkt sich im allgemeinen der kettenbegrenzende Effekt dieser Diamine zu stark aus.

In einer anderen Ausführungsform kann man neben den genannten Dicarbonsäuren als Kettenregler primäre Monoamine einsetzen, falls man eine Verringerung des Carboxylgruppengehaltes und eine Verbesserung der Schmelzstabilität des Produktes wünscht.

Als primäre Monoamine kommen $C_4$-$C_{12}$-Alkylamine und $C_6$-Aryl-$C_1$-$C_4$-alkylamine wie Butyl-, Pentyl-, Hexyl-, Heptyl-, Octyl-, Nonyl-, Decyl-, Undecyl-, Dodecylamin, Phenylmethyl-, Phenylethyl-, Phenylpropyl- und Phenylbutylamin in Betracht, vorzugsweise Hexylamin, Octylamin, Decylamin und Phenylethylamin.

Die primären Monoamine werden vorzugsweise im Bereich von 0,05 bis 0,5 Mol-%, besonders bevorzugt von 0,1 bis 0,4 Mol-%, bezogen auf Caprolactam, eingesetzt.

Im allgemeinen kann man die Polymerisation bei einem Druck im Bereich von 100 bis 2000 kPa durchführen. Eine besonders bevorzugte Ausführungsform besteht darin, daß man die Polymerisation kontinuierlich unter einem einheitlichen Druck von 100 bis 190, vorzugsweise von 100 bis 170 kPa, gemessen in der Dampfphase über der Polymerisationszone, durchführt, wobei man einen Gehalt von 0,1 bis 0,5, insbesondere von 0,1 bis 0,4 Gew.-% an Wasser in der Schmelze aufrechterhält. Es versteht sich, daß die oben in die Reaktionszone eingeführte überschüssige Wassermenge in Abhängigkeit vom angewandten Druck fortlaufend abdestilliert wird, um den vorgenannten Wassergehalt einzuhalten.

Die Polymerisationsdauer beträgt in der Regel 5 bis 20, bevorzugt 8 bis 12 Stunden, und richtet sich im wesentlichen nach den gewünschten Eigenschaften des Produkts.

Das Polycaprolactam entnimmt man der Polymerisationszone zweckmäßig am unteren Ende.

Der Gehalt an chemisch gebundenen Dicarbonsäuren (bestimmbar durch Hydrolyse des Polycaprolactams und anschließende Analyse) im extrahierten und getrockneten Endprodukt liegt in der Regel im Bereich von 5 bis 60 mMol/kg, bevorzugt von 10 bis 50 mMol/kg. Bei Werten unter 5 mMol/kg ergibt sich

5

im allgemeinen nicht die gewünschte Verbesserung der Eigenschaften der beim Schnellspinnen erhaltenen Fäden. Bei Werten über 60 mMol/kg ist es in der Regel nicht möglich, die zur Herstellung des Polymeren gewünschte relative Viskosität bzw. das gewünschte Molekulargewicht zu erreichen.

Enthält das Endprodukt zusätzlich chemisch gebundene Diamine, so liegt deren Gehalt im allgemeinen im Bereich von 5 bis 30 mMol/kg, bevorzugt von 10 bis 30 mMol/kg, wobei der Gehalt an chemisch gebundenen Dicarbonsäuren dann in der Regel im Bereich von 10 bis 50, bevorzugt von 15 bis 50 mMol/kg, liegt.

Den Gehalt des spinnfertigen Polycaprolactams an mit Wasser extrahierbaren Restmonomeren und Oligomeren wählt man im Bereich von 0 bis 2, vorzugsweise von 0 bis 1 Gew.-% Polycaprolactam.

Der Wassergehalt des spinnfertigen Polycaprolactams liegt in der Regel im Bereich unterhalb von 0,4, bevorzugt von 0,02 bis 0,15 Gew.-%.

Die erfindungsgemäßen unverwirbelten Fäden weisen in der Regel eine Höchstzugkraftdehnung im Bereich von 30 bis 100 %, bevorzugt von 40 bis 90 % auf. Durch Verwirbelung kann man die Höchstzugkraftdehnung gewünschtenfalls weiter absenken.

Das zu verspinnende Polycaprolactam sowie die daraus erhaltenen Fäden können übliche Zusatzstoffe und Verarbeitungshilfsmittel enthalten. Deren Anteil beträgt in der Regel bis zu 5, vorzugsweise bis zu 3 Gew.-%, bezogen auf das Gesamtgewicht des Polycaprolactams.

Übliche Zusatzstoffe sind beispielsweise Stabilisatoren und Oxidationsverzögerer, Mittel gegen Wärmezersetzung und Zersetzung durch ultraviolettes Licht, Farbstoffe, Pigmente, Mattierungsmittel und Antistatika.

Oxidationsverzögerer und Wärmestabilisatoren sind z.B. sterisch gehinderte Phenole, Hydrochinone, Phosphite und Abkömmlinge und substituierte Vertreter dieser Gruppe und Mischungen dieser Verbindungen, sowie Kupferverbindungen wie Kupfer-(I)-iodid und Kupfer-(II)-acetat.

Beispiele für UV-Stabilisatoren sind substituierte Resorcine, Salicylate, Benzotriazole und Benzophenone, die man im allgemeinen in Mengen bis zu 1 Gew.-% einsetzen kann; ferner eignen sich hierfür Mangan-(II)-Verbindungen.

Geeignete Farbstoffe sind organische Pigmente und die üblichen Spinnfarbstoffe wie Chrom- oder Kupferkomplexverbindungen, anorganische Pigmente wie Titandioxid und Cadmiumsulfid, Eisenoxide oder Farbruße.

Als Antistatika kann man die üblichen Stoffe, beispielsweise Polyalkylenoxide und Derivate davon einsetzen.

Die Zugabe der Zusatzstoffe kann man in jeder Stufe der Herstellung der erfindungsgemäßen Fäden durchführen, zweckmäßig gibt man die Stabilisatoren frühzeitig zu, um schon zu Beginn einen Schutz zu haben. In Übereinstimmung damit, gibt man im allgemeinen die Stabilisatoren schon während des Polymerisationsverfahrens zu, soweit sie dieses Verfahren nicht stören.

Die erfindungsgemäßen Fäden kann man gewünschtenfalls in an sich bekannter Weise verstrecken, streckzwirnen, streckspulen, streckschären, streckschlichten und strecktexturieren. Die Verstreckung zu sogenanntem Glattgarn kann dabei in ein und demselben Arbeitsgang mit dem Schnellspinnen (sog. fully drawn yarn, "FDY", oder fully oriented yarn, "FOY"), oder in einem getrenntem Arbeitsgang erfolgen. Das Streckschären, Streckschlichten und die Strecktexturierung führt man im allgemeinen in einem vom Schnellspinnen getrennten Arbeitsgang durch.

Die erfindungsgemäßen Fäden kann man in an sich bekannter Weise zu Fasern weiterverarbeiten. Flächengebilde können beispielsweise durch Weben, Wirken oder Stricken hergestellt werden.

Die erfindungsgemäßen schnellgesponnenen Fäden haben gegenüber Fäden des Standes der Technik den Vorteil, daß sie eine verbesserte Höchstzugkraft, einen steileren Zugkraft-Längenänderungsverlauf sowie eine verbesserte Kräuselbeständigkeit aufweisen. Des weiteren besitzen die erfindungsgemäßen Fäden nach den bisherigen Beobachtungen eine geringere Anzahl an Streckfehlern gegenüber bislang bekannten schnellgesponnenen Polycaprolactam-Fäden.

Die weiteren Untersuchungen haben ergeben, daß sich das erfindungsgemäß verwendete Polycaprolactam durch eine verminderte Elastizität der Schmelze auszeichnet und bei der Fadenbildung eine spezielle Kristallmorphologie entwickelt. Es wird vermutet, daß die verbesserten Eigenschaften der erfindungsgemäßen Fäden mit dem speziellen elastischen Verhalten der Polymerschmelze und mit der speziellen Morphologie der Fäden in Zusammenhang stehen.

Beispiele

Zur Herstellung von Polycaprolactam wurde ein VK-Rohr mit mechanisch durchmischter erster Reaktionszone nach EP-A 20,946 verwendet. Das VK-Rohr hatte ein Füllvolumen von 340 l und wurde mit einem Wärmeträgeröl beheizt.

Die Relative Viskosität RV des Polycaprolactams bzw. der versponnenen Fäden wurde bei einer Konzentration von 1 g pro 100 ml in 96 gew.-%iger Schwefelsäure bei 25°C bestimmt.

Der Restfeuchtegehalt wurde nach der Dampfdruckmethode mit dem Ackermann-Gerät bestimmt.

Der Gehalt an chemisch gebundener Dicarbonsäure und chemisch gebundenem Diamin errechnet sich aus der Zugabemenge. Man kann den Gehalt auch durch Hydrolyse des Polycaprolactams in verdünnter Mineralsäure und anschließende Analyse des so erhaltenen Gemischs bestimmen.

Zur Charakterisierung der Schmelze-Elastizität des Polycaprolactams wurde die bei oszillatorischer Scherung bestimmte Elastische Nachgiebigkeit $J_e$ der erfindungsgemäß mit Dicarbonsäure-geregelten Proben auf die Nachgiebigkeit $J_{e,Ref}$ von Propionsäure-geregelten Standardprodukten gleicher Viskosität bezogen.

Die Messungen wurden mit einem Rheometrics Dynamic Spectrometer RDS2 (Fa. Rheometrics) unter Verwendung einer Platte-Platte-Anordnung (Radius 25 mm, Abstand 1 mm) bei einer Temperatur von 250°C und einer Scheramplitude von 0,3 durchgeführt. Gemessen wurden der Speichermodul G' und der Verlustmodul G'' für Kreisfrequenzen von 0,3 rad/sec bis 100 rad/sec. In der Meßkurve wurde die Kreisfrequenz markiert, bei welcher der Verlustmodul gerade den Wert $G'' = 10^3$ Pa aufwies. Aus dem dazugehörigen Speichermodul G' berechnete sich die Nachgiebigkeit nach der Gleichung 1 zu

$$J_e = G'/(G'')^2 = G'/10^6 \ Pa^2 \hspace{3cm} (Gl. 1)$$

In analoger Weise wurde als Referenz für ein Propionsäure-geregeltes Produkt gleicher Viskosität die Nachgiebigkeit $J_{e,Ref}$ bestimmt. Schließlich wurde als relative Meßzahl R für die Schmelze-Elastizität das Verhältnis (Gleichung 2)

$$R = J_e/J_{e,Ref} \hspace{3cm} (Gl. 2)$$

berechnet. Letzteres stellt eine rheologische Kennzahl dar, die Unterschiede in der Elastizität der Schmelze mit sehr hoher Auflösung zu detektieren erlaubt.

Die Höchstzugkraftdehnung wurde mit einem Uster-Tensorapid-I-Meßgerät bestimmt, wobei die Einspannlänge bei vororientierten Fäden (POY) 200 mm, bei verstreckten und texturierten Fäden 500 mm betrug. Die Prüfzeit bis zum Bruch der Fäden lag im Bereich 20±2 Sekunden. Die Vorspannkraft betrug bei POY 0,025 cN/dtex, bei verstreckten Fäden 0,05 cN/dtex und bei texturierten Fäden 0,2 cN/dtex.

Die feinheitsbezogene Höchstzugkraft $R_H$ wurde nach Gleichung 3 berechnet

$$R_H = F_H/Tt_v \hspace{3cm} (Gl. 3)$$

wobei $F_H$ die Höchstzugkraft [cN] und $Tt_v$ die Ausgangsfeinheit [dtex] bedeuten. Als Höchstzugkraft wurde der größte Wert bei den Höchstzugkraftdehnungs-Messungen verwendet.

Die Höchstzugkraftdehnung $E_H$ wurde als Verhältnis der Längenänderung $\Delta l$ bei Erreichen der Höchstzugkraft zur Ausgangslänge $l_v$ der Meßprobe gemäß Gleichung 4 bestimmt:

$$E_H = \Delta l \bullet 100\%/l_v \hspace{3cm} (Gl. 4)$$

wobei sich $\Delta l$ aus der Differenz der Länge der Probe bei Höchstzugkraft, $l_H$, und der Ausgangslänge $l_v$ errechnet.

Parallel zu diesen Bestimmungen wurden Zugkraft-Längenänderungsdiagramme aufgezeichnet.

Die Schärfehler wurden mit einem Lindly Standard Yarn Inspector Series 1900 bei 600 m/min Schärgeschwindigkeit ermittelt.

Die Einkräuselung der texturierten Fäden wurde nach DIN 53 840 bestimmt.

Die Kennkräuselung der texturierten Fäden wurde nach DIN 53 840 bestimmt.

Die Kräuselbeständigkeit der texturierten Fäden wurde nach DIN 53 840 bestimmt.

Für einige ausgewählte Beispiele wurde die Morphologie der gesponnenen Fäden mittels Röntgenkleinwinkelstreuung (RKWS) charakterisiert. Die RKWS-Messungen wurden in einer unter Vorvakuum stehenden Kiessig-Lochkammer durchgeführt. Die Blenden in der Kollimatorröhre waren 0,4 bzw. 0,3 mm im Durchmesser, der Abstand A zwischen Faserprobe und Röntgenplanfilm (AGFA-GEVAERT, Osray M3) betrug 400 mm. Als Strahlenquelle diente eine mit 37 kV und 36 mA betriebene Cu-Röhre, deren mittels Graphit-Primärmonochromator selektierte $K\alpha$-Linie (Wellenlänge $\lambda = 0{,}15418$ nm) für die Messungen verwendet wurde. Für die RKWS-Untersuchungen wurden die POY-Fäden über einen Rahmen gewickelt, wobei auf eine exakte Parallellage der Einzelfäden geachtet wurde. Die 0,7 bis 1 mm dicken Faserbündel wurden vom Röntgenstrahl senkrecht getroffen, wobei die Faserachse vertikal stand. Die Belichtungszeit betrug 20 oder 40 h.

Die von der kristallin-amorphen Überstruktur der POY-Fäden herrührenden Meridianreflexe der RKWS-Filme wurden mit Hilfe eines Fotometers (Microdensitometer 3CS, Fa. Joyce Loebl) ausgewertet.

Die Merdianreflexe wurden dabei auf der durch das Meridianmaximum laufenden Parallelen zum Filmäquator unter Verwendung eines Graukeils der Schwärzung D = 0,95 abgetastet. Die Halbwertsbreite der resultierenden Fotometerkurve ist ein Maß für die Dicke $\Lambda_F$ der Kristallfibrillen senkrecht zur Faserachse. Für die laterale Kristalldicke $\Lambda_F$ folgt angenähert:

$$\Lambda_F \approx \lambda(nm)/B(rad) \qquad \qquad (Gl. 5)$$

wobei $\lambda$ die Röntgenwellenlänge und B(rad) die in Bogenmaß gemessene Halbwertsbreite der Fotometerkurve sind. B(rad) ergibt sich aus der in mm gemessenen Halbwertsbreite B(mm) gemäß

$$B(rad) = B(mm)/A \cdot F \qquad \qquad (Gl. 6)$$

Hier ist A der Abstand zwischen Faserprobe und Röntgenfilm und F der Übersetzungsfaktor des Fotometers. Mit A = 400 mm und F = 5 wird Gl. 5

$$\Lambda_F \approx [\lambda(nm)/B(mm)] \cdot 2 \cdot 10^3 \qquad \qquad (Gl. 7)$$

Zum Verspinnen wurde das Polycaprolactam in einem Extruder (Fa. Barmag 3E-24S, Schnecke 38 mm Durchmesser, L/D = 24) aufgeschmolzen und durch Düsen (Lochzahl 12, Lochdurchmesser 0,20 mm, Kapillarlänge 0,40 mm) gepreßt. Die hierbei erhaltenen Fäden wurden zuerst durch einen Blasschacht (Höhe 1600 mm, Queranblasung 0,4 m/sec mit Luft von 22 °C und 65% relativer Feuchtigkeit) und anschließend durch einen Fallschacht (Höhe 2000 mm) geleitet, auf einer Pilotspinnstelle der Fa. EMS-Inventa über 2 Galetten-Duos mit 150 mm Durchmesser abgezogen und mit einer Aufspulmaschine der Fa. Barmag SW 46 1S-900 aufgewickelt.

Der Abstand Düse-Öler betrug 1300 mm.

Die Verstreckung erfolgte kalt mit 740 m/min auf einer Streckzwirnmaschine (J5/10a, Fa. Rieter).

Die Strecktexturierung wurde auf einer Barmag FK6L-10 Strecktexturiermaschine bei 600 bzw. 800 m/min durchgeführt.

A Herstellung von Polycaprolactam

Beispiel 1

Geschmolzenes Caprolactam mit einem Gehalt von 0,5 Gew.-% Wasser und 0,53 Gew.-% Terephtalsäure als Kettenregler wurde dem VK-Rohr bei Normaldruck in der ersten Reaktionszone kontinuierlich unter Rühren zugeführt. Der Durchsatz betrug 25 kg/h. Gleichzeitig wurde eine Mischung aus 70 Gew.-% Polycaprolactam (RV = 1,9) und 30 Gew.-% Titandioxid (Anatas-Modifikation) in einer Menge von 225 g/h in die erste Polymerisationszone eingetragen. Die Temperatur der ersten Reaktionszone betrug 252 °C. Die in weiteren Reaktionszonen freiwerdende Polymerisationswärme wurde durch entsprechende Kühlung mit innenliegenden Wärmeaustauschern abgeführt. Die Temperatur der letzten Reaktionszone betrug 265 °C.

Das Produkt hatte nach Extraktion mit siedendem Wasser und anschließender Trocknung eine Rel. Viskosität von 2,39, einen Gehalt an (chemisch gebundener) Terephtalsäure von 36 mMol/kg, einen Restfeuchtegehalt von 0,046 Gew.-% und einen Titandioxidgehalt von 0,3 Gew.-%. Die elastische Nachgie-bigkeit $J_e$ betrug $8,3 \cdot 10^{-6}$ $Pa^{-1}$ und die relative Maßzahl R = 0,78.

Beispiel 2

Caprolactam wurde mit 0,80 Gew.-% Terephtalsäure als Kettenregler analog zu Beispiel 1 polymerisiert. Der Durchsatz betrug 30 kg/h und die Dosierung der Titandioxid-Mischung 270 g/h. Die übrigen Versuchsbedingungen von Beispiel 1 wurden beibehalten.

Das Produkt hatte eine Rel. Viskosität von 2,32 und einen Gehalt an (chemisch gebundener) Terephtalsäure von 54 mMol/kg. Die Elastische Nachgiebigkeit $J_e$ betrug $5,1 \cdot 10^{-6}$ $Pa^{-1}$ und R = 0,48. Der Titandioxidgehalt betrug 0,3 Gew.-%, der Restfeuchtegehalt lag bei 0,016 Gew.-%.

Beispiel 3

Caprolactam mit einem Wassergehalt von 0,7 Gew.-% wurde mit 0,21 Gew.-% Terephtalsäure als Kettenregler bei einem Überdruck von 30 kPa analog zu Beispiel 1 polymerisiert. Der Durchsatz betrug 34 kg/h. Die Temperatur der ersten Reaktionszone wurde auf 240°C eingestellt. Es wurde kein Titandioxid zugesetzt.

Das Produkt hatte eine Rel. Viskosität von 2,71 und einen Gehalt an (chemisch gebundener) Terephtalsäure von 14 mMol/kg. Der Restfeuchtegehalt betrug 0,019 Gew.-%.

Beispiel 4

Caprolactam mit einem Wassergehalt von 0,6 Gew.-% wurde mit 0,29 Gew.-% Terephtalsäure als Kettenregler analog zu Beispiel 3 polymerisiert. Die Temperatur der ersten Reaktionszone wurde auf 245°C eingestellt. Die übrigen Versuchsbedingungen von Beispiel 3 wurden beibehalten. Es wurde kein Titandioxid zugesetzt.

Das Produkt hatte eine Rel. Viskosität von 2,71 und einen Gehalt an (chemisch gebundener) Terephtalsäure von 19 mMol/kg. Der Restfeuchtegehalt betrug 0,021 Gew.-%.

Beispiel 5a

Caprolactam mit einem Wassergehalt von 0,6 Gew.-% wurde mit 0,37 Gew.-% Terephtalsäure als Kettenregler analog zu Beispiel 3 polymerisiert. Die Temperatur der ersten Reaktionszone wurde auf 251°C eingestellt. Die übrigen Versuchsbedingungen von Beispiel 3 wurden beibehalten. Es wurde kein Titandioxid zugesetzt.

Das Produkt hatte eine Rel. Viskosität von 2,67 und einen Gehalt an (chemisch gebundener) Terephtalsäure von 25 mMol/kg. Der Restfeuchtegehalt betrug 0,091 Gew.-%.

Beispiel 5b

Caprolactam mit einem Gehalt von 0,5 Gew.-% Wasser und 0,26 Gew.-% Adipinsäure als Kettenregler wurde analog Beispiel 3 polymerisiert. Der Durchsatz betrug 35 kg/h. Die Temperatur der ersten Reaktionszone wurde auf 250°C eingestellt. Es wurde kein Titandioxid zugesetzt.

Das Produkt hatte eine relative Viskosität von 2,67 und einen Gehalt an chemisch gebundener Adipinsäure von 20 mMol/kg. Der Restfeuchtegehalt betrug 0,018 Gew.-%.

Beispiel 5c

Caprolactam wurde unter Zusatz von 0,5 Gew.-% Wasser, 0,81 Gew.-% Lithiumsalz der 5-Sulfoisophthalsäure als Kettenregler und 0,18 Gew.-% Titandioxid polymerisiert. Das Produkt hatte nach der Extraktion mit siedendem Wasser und anschließender Trocknung eine relative Viskosität von 2,55, einen Titandioxidgehalt von 0,20 Gew.-% und einen Restfeuchtegehalt von 0,031 Gew.-%.

B Schnellspinnen von Polycaprolactam

Beispiel 6

Das in Beispiel 1 hergestellte Polycaprolactam wurde mit einer Schmelze-Temperatur von 265°C (a) bei 4500 m/min und (b) bei 5500 m/min versponnen. Die RV des Fadens betrug 2,48. Der Spinntiter betrug bei (a) dtex 50 f 12 und (b) dtex 41 f 12. Die bei einer Spinngeschwindigkeit von 4500 m/min erhaltenen und anschließend verstreckten Fäden hatten einen Titer von dtex 44 f 12.

Tabelle 1 zeigt die Ergebnisse.

Vergleichsbeispiel 1

Der Versuch aus Beispiel 6 wurde mit einem handelsüblichen Polycaprolactam (Kettenregler : Propionsäure, Gehalt im Produkt = 40 mMol/kg; RV = 2,37; Titandioxid-Gehalt = 0,3 Gew.-%; elastische Nachgiebigkeit $11,5 \cdot 10^{-6}$ Pa$^{-1}$; Restfeuchtigkeitsgehalt 0,044 Gew.-%) unter sonst gleichen Bedingungen wiederholt.

EP 0 644 959 B1

Tabelle 1 zeigt die Ergebnisse.

Beispiel 7

Das in Beispiel 2 hergestellte Polycaprolactam wurde mit einer Schmelze-Temperatur von 265°C (a) bei 5500 m/min und (b) bei 6000 m/min versponnen. Die RV des Fadens betrug 2,31. Der Spinntiter betrug (a) dtex 42 f 12 und (b) dtex 43 f 12.
Tabelle 2 zeigt die Ergebnisse.

Vergleichsbeispiel 2

Der Versuch aus Beispiel 7 wurde mit dem gleichen handelsüblichen Polycaprolactam aus Vergleichsbeispiel 1 unter sonst gleichen Bedingungen wiederholt.
Tabelle 2 zeigt die Ergebnisse.

Beispiel 8

Das in Beispiel 3 hergestellte Polycaprolactam wurde mit einer Schmelze-Temperatur von 275°C und (a) bei 4500 m/min, (b) bei 5500 m/min und (c) bei 6000 m/min versponnen. Die RV des Fadens betrug 2,79. Der Spinntiter betrug (a) dtex 54 f 12, (b) dtex 51 f 12 und (c) dtex 52 f 12. Der Strecktiter war dtex 45 f 12, die Spinngeschwindigkeit 4500 m/min.
Tabelle 3 zeigt die Ergebnisse.

Vergleichsbeispiel 3

Der Versuch aus Beispiel 8 wurde mit einem handelsüblichen Polycaprolactam (Kettenregler : Propionsäure, Gehalt im Produkt = 20 mMol/kg; RV = 2,68; elastische Nachgiebigkeit $10,0 \cdot 10^{-6}$ $Pa^{-1}$; Restfeuchtigkeitsgehalt 0,012 Gew.-%) unter sonst gleichen Bedingungen wiederholt.
Tabelle 3 zeigt die Ergebnisse.

Beispiel 9

Das in Beispiel 4 hergestellte Polycaprolactam wurde mit einer Schmelze-Temperatur von 275°C bei 4500 m/min versponnen. Die RV des Fadens betrug 2,83. Der Spinntiter war dtex 54 f 12. Anschließend wurde auf einer Strecktexturiermaschine (Fa. Barmag FK 6L-10) bei 600 m/min und einer Heizertemperatur von 180°C bei einem D:Y-Verhältnis von 2,33 zu HE-Garn strecktexturiert (Scheibenkombination und Anordnung: Ceratex Vollkeramikscheiben in der Anordnung 1-5-1).
Tabelle 4 zeigt die Ergebnisse.

Vergleichsbeispiel 4

Der Versuch aus Beispiel 9 wurde mit dem handelsüblichen Polycaprolactam aus Vergleichsbeispiel 3 (Restfeuchtegehalt 0,017 Gew.-%) unter sonst gleichen Bedingungen wiederholt.
Tabelle 4 zeigt die Ergebnisse.

Beispiel 10

Das in Beispiel 5a hergestellte Polycaprolactam wurde mit einer Schmelze-Temperatur von 275°C bei 5500 m/min versponnen. Die RV des Fadens betrug 2,69. Der Spinntiter betrug dtex 54 f 12.
Tabelle 5 zeigt die Ergebnisse.

Vergleichsbeispiel 5

Der Versuch aus Beispiel 10 wurde mit einem handelsüblichen Polycaprolactam (Kettenregler : Propionsäure, Gehalt im Produkt = 20 mMol/kg; RV = 2,66; elastische Nachgiebigkeit $10,0 \cdot 10^{-6}$ $Pa^{-1}$; Restfeuchtigkeitsgehalt 0,098 Gew.-%) unter sonst gleichen Bedingungen wiederholt.
Tabelle 5 zeigt die Ergebnisse.

10

Beispiel 11

Ein analog zu Beispiel 5a hergestelltes Polycaprolactam (0,37 Gew.-% Terephtalsäure als Kettenregler, Relative Viskosität 2,67, Gehalt an chemisch gebundener Terephtalsäure im Endprodukt 25 mMol/kg, Restfeuchtegehalt von 0,02 Gew.-%) wurde bei einer Schmelzetemperatur von 275°C bei 4500 m/min versponnen. Die RV des Fadens betrug 2,78. Der Spinntiter betrug dtex 54 f 12. Anschließend wurde auf einer Strecktexturiermaschine (Fa. Barmag, FK6L-10) bei 800 m/min, einer Heizertemperatur von 180°C mit einer Scheibenkombination Ceratex 1-5-1 und einem D:Y-Verhältnis von 2,2 strecktexturiert.
Tabelle 6 zeigt die Ergebnisse.

Vergleichsbeispiel 6

Der Versuch aus Beispiel 11 wurde mit einem handelsüblichen Polycaprolactam (Kettenregler: Propionsäure, Gehalt im Produkt = 20 mMol/kg; RV = 2,68; Restfeuchtegehalt 0,017 Gew.-%) unter sonst gleichen Bedingungen wiederholt.
Tabelle 6 zeigt die Ergebnisse.

Vergleichsbeispiel 7 (analog zu DE-A 40 19 780)

Polycaprolactam, hergestellt analog zu Beispiel 4 der DE-A 40 19 780, mit einer relativen Viskosität von 2,36, einem Gehalt an Titandioxid von 0,03 Gew.-% und einem Restfeuchtegehalt von 0,04 Gew.-%, wurde in einem Extruder (Barmag 3E, 3-Zonen-Schnecke 30 mm Durchmesser mit LTM-Teil (Low-Temperature-Mixing), L/D = 24) bei 269°C aufgeschmolzen und durch Düsen (13 Loch, Lochdurchmesser 0,20 mm, Kapillarlänge 0,40 mm) gepreßt. Anschließend wurden die Fäden in einem Blasschacht (Länge 1500 mm, mit Queranblasung) mit Luft von 24°C und 40% relativer Feuchtigkeit abgekühlt und anschließend durch einen Fallschacht von 2200 mm Länge zur Aufspulung geführt.
Die Aufspulung erfolgte galettenlos mit einem Spulkopf der Fa. Barmag, (SW46 SSD) bei 4250 m/min. Der Spinntiter war dtex 56 f 13.
Der Abstand Düse-Öler betrug 1300 mm.
Die Verstreckung erfolgte kalt auf einer Streckzwirnmaschine (Fa. Rieter, J5/10a) mit 605 m/min zum Strecktiter dtex 44 f 13.
Tabelle 7 zeigt die Ergebnisse.

Vergleichsbeispiel 8

Der Versuch aus Vergleichsbeispiel 7 wurde mit handelsüblichem Polycaprolactam (Kettenregler: Propionsäure, Gehalt im Produkt = 40 mMol/kg; RV = 2,36, Titandioxid: 0,03%, Restfeuchtigkeitsgehalt: 0,04 Gew.-%) unter sonst gleichen Bedingungen wiederholt.

Beispiel 12

Das in Beispiel 5b hergestellte Polycaprolactam wurde mit einer Schmelzetemperatur von 275°C (a) bei 4500 m/min, (b) 5500 m/min und (c) 6000 m/min versponnen. Die RV des Fadens betrug 2,78. Der Spinntiter betrug bei (a) dtex 53 f 12, (b) dtex 53 f 12 und (c) dtex 54 f 12. Die bei einer Spinngeschwindigkeit von 4500 m/min erhaltenen und anschließend verstreckten Fäden hatten einen Titer von dtex 44 f 12.
Tabelle 8 zeigt die Ergebnisse.

Beispiel 13

Das in Beispiel 5c hergestellte Polycaprolactam wurde mit einer Schmelzetemperatur von 275°C (a) bei 4500 m/min, (b) 5500 m/min und (c) 6000 m/min versponnen. Die RV des Fadens betrug 2,57. Der Spinntiter betrug bei (a) dtex 54 f 12, (b) dtex 54 f 12 und (c) dtex 55 f 12. Die bei einer Spinngeschwindigkeit von 4500 m/min erhaltenen und anschließend verstreckten Fäden hatten einen Titer von dtex 44 f 12.
Tabelle 8 zeigt die Ergebnisse.

Vergleichsbeispiel 9

Die Versuche aus Beispiel 12 und 13 wurden mit einem handelsüblichen Polycaprolactam (Kettenregler: Propionsäure; Gehalt im Produkt: 20 mMol/kg; RV: 2,72; Restfeuchtegehalt: 0,033 Gew.-%) unter sonst gleichen Bedingungen wiederholt.

Tabelle 8 zeigt die Ergebnisse.

Tabelle 1: Beispiel 6 und Vergleichsbeispiel 1

| | | Beispiel 6 | | Vergleichsbeispiel 1 | |
|---|---|---|---|---|---|
| | | (a) | (b) | (a) | (b) |
| Abzugsgeschwindigkeit | m/min | 4500 | 5500 | 4500 | 5500 |
| POY (preoriented yarn) feinheitsbez. Höchstzugkraft | cN/dtex | 4,5 | 4,6 | 4,3 | 4,2 |
| Höchstzugkraftdehnung | % | 57 | 53 | 58 | 54 |
| Verstreckte Fäden feinheitsbez. Höchstzugkraft | cN/dtex | 4,8 | | 4,6 | |
| Höchstzugkraftdehnung | % | 38 | | 38 | |
| Streckfehler/100 kg | | 0,3 | | 1,0 | |
| Schärfefehler/100 km | | 0,02 | | 0,03 | |

Das Beispiel 6 zeigt, daß die feinheitsbezogene Höchstzugkraft der Fäden höher liegt und die Weiterverarbeitung mit einer geringeren Fehlerzahl erfolgte als beim Vergleichsbeispiel 1.

Tabelle 2: Beispiel 7 und Vergleichsbeispiel 2

| | | Beispiel 7 | | Vergleichs- beispiel 2 | |
|---|---|---|---|---|---|
| | | (a) | (b) | (a) | (b) |
| Abzugsgeschwindigkeit | m/min | 5500 | 6000 | 5500 | 6000 |
| POY (preoriented yarn) feinheitsbez. Höchstzugkraft | cN/dtex | 4,8 | 4,8 | 4,2 | 4,4 |
| Höchstzugkraftdehnung | % | 55 | 51 | 54 | 50 |
| Laterale Kristalldicke | [nm] | 4,7 | 5,9 | 8,0 | 9,4 |

In diesen Beispielen liegt die feinheitsbezogene Höchstzugkraft der Fäden (POY) um 9-14 % höher als bei Fäden aus dem Stand der Technik.

Tabelle 3: Beispiel 8 und Vergleichsbeispiel 3

| | | Beispiel 8 | | | Vergleichsbeispiel 3 | | |
|---|---|---|---|---|---|---|---|
| | | (a) | (b) | (c) | (a) | (b) | (c) |
| Abzugsgeschwindigkeit | m/min | 4500 | 5500 | 6000 | 4500 | 5500 | 6000 |
| POY (preoriented yarn) feinheitsbez. Höchstzugkraft | cN/dtex | 4,19 | 4,39 | 4,43 | 3,72 | 3,81 | 3,75 |
| Höchstzugkraftdehnung | % | 72 | 62 | 56 | 75 | 66 | 59 |
| Laterale Kristalldicke | [nm] | 9,1 | | | 10,5 | | |
| Verstreckte Fäden feinheitsbez. Höchstzugkraft | cN/dtex | 4,73 | | | 4,38 | | |
| Höchstzugkraftdehnung | % | 39 | | | 36 | | |

Diese Beispiele zeigen, daß die feinheitsbezogene Höchstzugkraft der erfindungsgemäßen Fäden (POY) auch bei ihrem relativ geringen Dicarbonsäuregehalt im POY um 3-18 % höher liegt als beim Vergleichs- material und daß bei Abzugsgeschwindigkeiten von 6000 m/min eine weitere Steigerung der Werte ein- tritt.

Tabelle 4: Beispiel 9 und Vergleichsbeispiel 4

| | Beispiel 9 | Vergleichs-beispiel 4 |
|---|---|---|
| <u>POY</u> (preoriented yarn)<br>feinheitsbez. Höchstzugkraft cN/dtex | 4,45 | 3,79 |
| Höchstzugkraftdehnung % | 70 | 78 |
| <u>Strecktexturierte Fäden</u><br>Streckverhältnis | 1:1,25 | 1:1,31 |
| Titer dtex | 45 f 12 | 43 f 12 |
| feinheitsbez. Höchstzugkraft cN/dtex | 4,8 | 4,4 |
| Höchstzugkraftdehnung % | 29 | 29 |
| Einkräuselung E % | 59 | 59 |
| Kennkräuselung K % | 43 | 41 |
| Kräuselbeständigkeit B % | 84 | 77 |

In diesem Beispiel liegen die feinheitsbezogenen Höchstzugkräfte der erfindungsgemäßen Fäden (POY) um 19 % und im strecktexturierten Garn um 9 % höher als beim Vergleichsmaterial. Die Kräuselbeständigkeit ist bei den erfindungsgemäßen Polycaprolactamfäden wesentlich erhöht (9 %).

Tabelle 5: Beispiel 10 und Vergleichsbeispiel 5

| | Beispiel 10 | Vergleichs-beispiel 5 |
|---|---|---|
| POY (preoriented yarn) feinheitsbez. Höchstzugkraft        cN/dtex | 4,9 | 4,5 |
| Höchstzugkraftdehnung                        % | 53,9 | 55,5 |

Das Beispiel demonstriert die ausgezeichnete feinheitsbezogene Höchstzugkraft der erfindungsgemäßen Fäden im Vergleich zum Stand der Technik. Wie das Beispiel zeigt, ist die Kombination von  hoher Festigkeit und niedriger Höchstzugkraftdehnung, die durch Verwirbelung noch reduziert werden kann, für POY ungewöhnlich. Es zeigt die hervorragende Eignung der erfindungsgemäßen Fäden zur direkten Weiterverwendung, d.h. ohne zusätzliche Verstreckung, als POY "ready to use " ("as spun").

Tabelle 6: Beispiel 11 und Vergleichsbeispiel 6

| | | Beispiel 11 | Vergleichs-beispiel 6 |
|---|---|---|---|
| <u>POY</u> (preoriented yarn)<br>feinheitsbez. Höchstzugkraft | cN/dtex | 4,27 | 3,79 |
| Höchstzugkraftdehnung | % | 66 | 78 |
| Laterale Kristalldicke | [nm] | 7,7 | 10,5 |
| <u>Strecktexturierte Fäden</u><br>Streckverhältnis | | 1:1,25 | 1:1,31 |
| Titer | dtex | 45 f 12 | 43 f 12 |
| feinheitsbez. Höchstzugkraft | cN/dtex | 4,90 | 4,36 |
| Höchstzugkraftdehnung | % | 30 | 29 |
| Einkräuselung | E % | 57 | 58 |
| Kennkräuselung | K % | 40 | 39 |
| Kräuselbeständigkeit | B % | 83 | 76 |

In diesem Beispiel liegt die feinheitsbezogene Höchstzugkraft der erfindungsgemäßen Fäden im strecktexturierten Garn um 12 % höher als beim Vergleichsmaterial. Die Kräuselbeständigkeit ist um 9 % erhöht und zeigt die Eignung der erfindungsgemäßen Fäden auch für hohe Strecktexturiergeschwindigkeiten.

EP 0 644 959 B1

Tabelle 7: Vergleichsbeispiele 7 und 8

| | | Vergleichs-beispiel 7 | Vergleichs-beispiel 8 |
|---|---|---|---|
| POY feinheitsbez. Höchstzugkraft | [cN/dtex] | 4,43 | 4,31 |
| Höchstzugkraftdehnung | [%] | 68 | 68 |
| Verstreckte Fäden: feinheitsbez. Höchstzugkraft | [cN/dtex] | 4,95 | 4,98 |
| Höchstzugkraftdehnung | [%] | 35 | 34 |
| Streckfehler/100 kg | | 1,1 | 0 |
| Schärfehler/100 km | | 0,31 | 0.17 |

Diese Vergleichsbeispiele zeigen, daß bei einer Abzugsgeschwindigkeit von 4250 m/min und einer RV von 2,36 im Falle des Dicarbonsäure-geregelten Produktes (Vergl.-Bsp. 7) die feinheitsbezogene Höchstzugkraft des POY nur um 2,8 % besser ist als bei einem Monocarbonsäure-geregelten Produkt. Dies liegt noch innerhalb der Bestimmungsgenauigkeit. Bei den verstreckten Fäden läßt sich keine Verbesserung gegenüber einem Produkt aus dem Stand der Technik (Vergl.-Bsp. 8) erkennen.

Tabelle 8: Beispiel 12, 13 und Vergleichsbeispiel 9

| | Beispiel 12 | | | Beispiel 13 | | | Vergleichs-beispiel 9 | | |
|---|---|---|---|---|---|---|---|---|---|
| | (a) | (b) | (c) | (a) | (b) | (c) | (a) | (b) | (c) |
| Abzugsgeschwindigkeit [m/min] | 4500 | 5500 | 6000 | 4500 | 5500 | 6000 | 4500 | 5500 | 6000 |
| POY (preoriented yarn) feinheitsbez. Höchstzugkraft [cN/dtex] | 4,6 | 4,6 | 4,7 | 4,6 | 4,8 | 4,8 | 4,1 | 4,2 | 4,1 |
| Höchstzugkraftdehnung [%] | 70 | 61 | 54 | 68 | 59 | 54 | 77 | 65 | 60 |
| verstreckte Fäden feinheitsbez. Höchstzugkraft [cN/dtex] | 5,3 | | | 5,5 | | | 4,9 | | |
| Höchstzugkraftdehnung [%] | 39 | | | 36 | | | 40 | | |

In diesen Beispielen liegen die feinheitsbezogene Höchstzugkraft der Fäden im POY und verstreckten Fäden um 8 bis 17 % höher als bei Fäden aus dem Stand der Technik.

## Patentansprüche

1. Fäden mit einer relativen Viskosität RV von 2,0 bis 3,0 (gemessen bei einer Konzentration von 1 g Fäden pro 100 ml in 96 gew.-%iger Schwefelsäure) auf der Basis von Polycaprolactam, erhältlich durch

EP 0 644 959 B1

(a) Extrudieren einer im wesentlichen aus Polycaprolactam bestehenden Schmelze durch eine Spinndüse, so daß Polycaprolactamfilamente gebildet werden;

(b) Abkühlen der so hergestellten Filamente und

(c) Abziehen der abgekühlten Filamente, dadurch gekennzeichnet, daß man die abgekühlten Filamente mit einer Geschwindigkeit von mindestens [3600 + 1250•(3,0 - RV)] m/min abzieht,

mit der Maßgabe, daß das verwendete Polycaprolactam in Gegenwart von mindestens einer Dicarbonsäure, ausgewählt aus der Gruppe aus

- $C_4$-$C_{10}$-Alkandicarbonsäuren,
- $C_5$-$C_8$-Cycloalkandicarbonsäuren,
- Benzol- und Naphthalindicarbonsäuren, die bis zu zwei Sulfonsäuregruppen tragen können und deren Carbonsäuregruppen nicht benachbart sind,
- N-$C_1$-$C_6$-Alkyl-N,N-di($C_4$-$C_{10}$-alkancarbonsäure)amin,
- 1,4-Piperazin-di($C_1$-$C_{10}$-alkancarbonsäure)

hergestellt wurde.

2. Fäden gemäß Anspruch 1, dadurch gekennzeichnet, daß das Polycaprolactam in Gegenwart von mindestens einem N,N-Di-($C_1$-$C_6$-alkyl)amino-($C_2$-$C_{12}$-alkyl)amin hergestellt wurde.

3. Fäden gemäß Anspruch 1 oder 2, dadurch gekennzeichnet, daß die Fäden eine Höchstzugkraftdehnung von höchstens 100% aufweisen.

4. Verfahren zur Herstellung von Fäden mit einer relativen Viskosität RV von 2,0 bis 3,0 (gemessen bei einer Konzentration von 1 g Fäden pro 100 ml in 96 gew.-%iger Schwefelsäure) auf der Basis von Polycaprolactam gemäß Anspruch 1, indem man

(a) eine im wesentlichen aus Polycaprolactam bestehende Schmelze durch eine Spinndüse extrudiert, so daß Polycaprolactamfilamente gebildet werden;

(b) die so hergestellten Filamente abkühlt und

(c) die abgekühlten Filamente abzieht, dadurch gekennzeichnet, daß man die abgekühlten Filamente mit einer Geschwindigkeit von mindestens [3600 + 1250•(3,0 - RV)] m/min abzieht,

mit der Maßgabe, daß das verwendete Polycaprolactam in Gegenwart von mindestens einer Dicarbonsäure, ausgewählt aus der Gruppe aus

- $C_4$-$C_{10}$-Alkandicarbonsäuren,
- $C_5$-$C_8$-Cycloalkandicarbonsäuren,
- Benzol- und Naphthalindicarbonsäuren, die bis zu zwei Sulfonsäuregruppen tragen können und deren Carbonsäuregruppen nicht benachbart sind,
- N-$C_1$-$C_6$-Alkyl-N,N-di($C_4$-$C_{10}$-alkancarbonsäure)amin,
- 1,4-Piperazin-di($C_1$-$C_{10}$-alkancarbonsäure)

hergestellt wurde.

5. Verfahren zur Herstellung von Fäden auf der Basis von Polycaprolactam gemäß Anspruch 4, dadurch gekennzeichnet, daß man Polycaprolactam verwendet, das in Gegenwart von mindestens einem N,N-Di-($C_1$-$C_6$-alkyl)amino-($C_2$-$C_{12}$- alkyl)amin oder einem primären $C_4$-$C_{12}$-Alkylamin oder $C_6$-Aryl-$C_1$-$C_4$-alkylamin hergestellt wurde.

6. Verwendung der Fäden gemäß Anspruch 1, 2 oder 3 oder hergestellt gemäß Anspruch 4 oder 5 zur Herstellung von Fasern und Flächengebilden.

7. Fasern und Flächengebilde, erhältlich durch die Verwendung gemäß Anspruch 6.

**Claims**

1. Filament yarns having a relative viscosity RV of from 2.0 to 3.0 (measured at a concentration of 1 g of yarn per 100 ml in 96% strength by weight sulfuric acid) based on polycaprolactam, obtainable by

(a) extruding a melt consisting essentially of polycaprolactam through a spinneret to form polycaprolactam filaments,

(b) cooling the filaments thus produced, and

(c) taking off the cooled filaments characterized in that the cooled filaments are taken off at a speed of at least [3600 + 1250 $\times$ (3.0 - RV)] m/min,

20

with the proviso that the polycaprolactam used was prepared in the presence of at least one dicarboxylic acid selected from the group consisting of
- $C_4$-$C_{10}$-alkanedicarboxylic acids,
- $C_5$-$C_8$-cycloalkanedicarboxylic acids,
- benzene- and naphthalene-dicarboxylic acids which may carry up to two sulfonic acid groups and whose carboxylic acid groups are not adjacent to each other,
- N-$C_1$-$C_6$-alkyl-N,N-di($C_4$-$C_{10}$-alkanecarboxylic acid)amine,
- 1,4-piperazinedi($C_1$-$C_{10}$-alkanecarboxylic acid).

2. Filament yarns as claimed in claim 1, characterized in that the polycaprolactam was prepared in the presence of at least one N,N-di($C_1$-$C_6$-alkyl)amino($C_2$-$C_{12}$-alkyl)amine.

3. Filament yarns as claimed in claim 1 or 2, characterized in that they have a breaking extension of at most 100%.

4. A process for producing filament yarns having a relative viscosity RV of from 2.0 to 3.0 (measured at a concentration of 1 g of yarn per 100 ml in 96% strength by weight sulfuric acid) based on polycaprolactam as claimed in claim 1, by
(a) extruding a melt consisting essentially of polycaprolactam through a spinneret to form polycaprolactam filaments,
(b) cooling the filaments thus produced, and
(c) taking off the cooled filaments characterized in that the cooled filaments are taken off at a speed of at least $[3600 + 1250 \times (3.0 - RV)]$ m/min,
with the proviso that the polycaprolactam used was prepared in the presence of at least one dicarboxylic acid selected from the group consisting of
- $C_4$-$C_{10}$-alkanedicarboxylic acids,
- $C_5$-$C_8$-cycloalkanedicarboxylic acids,
- benzene- and naphthalene-dicarboxylic acids which may carry up to two sulfonic acid groups and whose carboxylic acid groups are not adjacent to each other,
- N-$C_1$-$C_6$-alkyl-N,N-di($C_4$-$C_{10}$-alkanecarboxylic acid)amine,
- 1,4-piperazinedi($C_1$-$C_{10}$-alkanecarboxylic acid).

5. A process for producing filament yarns based on polycaprolactam as claimed in claim 4, characterized in that the polycaprolactam was prepared in the presence of at least one N,N-di($C_1$-$C_6$-alkyl)amino($C_2$-$C_{12}$-alkyl)amine or in the presence of at least one primary $C_4$-$C_{12}$-alkylamine or in the presence of at least one $C_6$-aryl-$C_1$-$C_4$-alkylamine.

6. The use of the filament yarns as claimed in claim 1, 2 or 3 or produced as claimed in claim 4 or 5 for producing fibers and sheetlike structures.

7. The fibers and sheetlike structures obtainable by the use of claim 6.

**Revendications**

1. Fils ayant une viscosité relative VR de 2,0 à 3,0 (mesurée avec une concentration de 1 g de fils pour 100 ml dans de l'acide sulfurique à 96% en poids), à base de polycaprolactame, obtenus par
a) extrusion d'une masse fondue composée essentiellement de polycaprolactame à travers une filière, de façon à former des filaments de polycaprolactame,
b) refroidissement des filaments ainsi fabriqués et
c) étirage des filaments refroidis,
caractérisés en ce que l'on étire les filaments refroidis à une vitesse d'au moins $[3600 + 1250 . (3,0 - VR)]$ m/min,
étant spécifié que le polycaprolactame utilisé a été préparé en présence d'au moins un acide dicarboxylique choisi dans le groupe
- des acides (alcane en $C_4$-$C_{10}$)dicarboxyliques,
- des acides (cycloaloane en $C_5$-$C_8$)dicarboxyliques,
- des acides benzène- et naphtalène-dicarboxyliques, qui peuvent porter jusqu'à deux groupements acide sulfonique et dont les groupements acide carboxylique ne sont pas voisins,

- des N-[alkyle en $C_1$-$C_6$]-N,N-di[acide (alcane en $C_4$-$C_{10}$)carboxylique]amines,
- des 1,4-pipérazine-di[acides (alcane en $C_1$-$C_{10}$)carboxyliques].

2. Fils selon la revendication 1, caractérisés en ce que le polycaprolactame a été préparé en présence d'au moins une N,N-di(alkyle en $C_1$-$C_6$)amino-(alkyle en $C_2$-$C_{12}$)amine.

3. Fils selon la revendication 1 ou 2, caractérisés en ce qu'ils présentent un allongement maximal à la force de traction de 100% au maximum.

4. Procédé de fabrication de fils ayant une viscosité relative VR de 2,0 à 3,0 (mesurée avec une concentration de 1 g de fils pour 100 ml dans de l'acide sulfurique à 96% en poids), à base de polycaprolactame selon la revendication 1, dans lequel
   a) on extrude une masse fondue composée essentiellement de polycaprolactame à travers une filière, de façon à former des filaments de polycaprolactame,
   b) on refroit les filaments ainsi fabriqués et
   c) on étire les filaments refroidis,
   caractérisé en ce que l'on étire les filaments refroidis à une vitesse d'au moins [3600 + 1250. (3,0 - VR)] m/min,
   étant spécifié que le polycaprolactame utilisé a été préparé en présence d'au moins un acide dioarboxylique choisi dans le groupe
   - des acides (alcane en $C_4$-$C_{10}$)dicarboxyliques,
   - des acides (cycloalcane en $C_5$-$C_8$)dicarboxyliques,
   - des acides benzène- et naphtalène-dicarboxyliques, qui peuvent porter jusqu'à deux groupements acide sulfonique et dont les groupements acide carboxylique ne sont pas voisins,
   - des N-[alkyle en $C_1$-$C_6$]-N,N-di[acide (alcane en $C_4$-$C_{10}$)carboxylique]amines,
   - des 1,4-pipérazine-di[acides (alcane en $C_1$-$C_{10}$)carboxyliques].

5. Procédé de fabrication de fils à base de polycaprolactame selon la revendication 4, caractérisé en ce que l'on utilise un polycaprolactame qui a été préparé en présence d'au moins une N,N-di(alkyle en $C_1$-$C_6$)amino-(alkyle en $C_2$-$C_{12}$)amine, une (alkyle en $C_4$-$C_{12}$)amine primaire ou une (aryle en $C_6$)-(alkyle en $C_1$-$C_4$)amine.

6. Utilisation des fils selon l'une quelconque des revendications 1 à 3 ou fabriqués selon la revendication 4 ou 5, pour la fabrication de fibres et d'articles plats à grande surface.

7. Fibres et articles plats à grande surface, obtenus par l'utilisation selon la revendication 6.